(19) Europäisches Patentamt
European Patent Office
Office européen des brevets

(11) **EP 2 053 366 A1**

(12) **EUROPEAN PATENT APPLICATION**
published in accordance with Art. 153(4) EPC

(43) Date of publication:
**29.04.2009 Bulletin 2009/18**

(51) Int Cl.:
**G01F 1/66** (2006.01)

(21) Application number: **07807654.4**

(22) Date of filing: **20.09.2007**

(86) International application number:
**PCT/JP2007/068302**

(87) International publication number:
**WO 2008/035744 (27.03.2008 Gazette 2008/13)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **20.09.2006 JP 2006254432**

(71) Applicant: **Panasonic Corporation**
**Kadoma-shi**
**Osaka 571-8501 (JP)**

(72) Inventors:
- **IWANAGA, Shigeru c/o Panasonic Corp.**
  **Intellectual Property Rights Operations Company**
  **Chuo-ku, Osaka-shi, Osaka 540-6207 (JP)**
- **NAKABAYASHI, Yuji c/o Panasonic Corp.**
  **Intellectual Property Rights Operations Company**
  **Chuo-ku, Osaka-shi, Osaka 540-6207 (JP)**

(74) Representative: **Schwabe - Sandmair - Marx**
**Patentanwälte**
**Stuntzstrasse 16**
**81677 München (DE)**

(54) **ULTRASONIC TYPE FLUID MEASUREMENT DEVICE**

(57)    An ultrasonic fluid measuring device capable of improving a measuring accuracy is provided.

An ultrasonic fluid measuring device 10 includes an ultrasonic measuring portion 20 in which a first ultrasonic transmitter-receiver 21 and a second ultrasonic transmitter-receiver 22 are provided to a measuring pass 14, and first to fifth pass partition plates 25 to 29 that are set in substantially parallel with an ultrasonic propagation path 24 that connects the first ultrasonic transmitter-receiver 21 and the second ultrasonic transmitter-receiver 22, whereby first to sixth flat passes 32 to 37 are laminated/ formed in the measuring pass 14 by the pass partition plates 25 to 29. In this ultrasonic fluid measuring device 10, the first ultrasonic transmitter-receiver 21 and the second ultrasonic transmitter-receiver 22 are arranged with respect to respective flat passes 32 to 37 such that the ultrasonic measuring portion 20 measures a flow rate of the flat pass that is deviated from a center along a lamination direction.

FIG. 6

**Description**

Technical Field

The present invention relates to an ultrasonic fluid measuring device constructed such that a first ultrasonic transmitter-receiver and a second ultrasonic transmitter-receiver of an ultrasonic measuring portion are provide to a measuring pass so as to measure a flow rate of a fluid flowing through the measuring pass by the ultrasonic measuring portion.

Background Art

The ultrasonic fluid measuring device is the device that measures a propagation time of an ultrasonic wave in such a situation that the ultrasonic wave is caused to propagate through a measuring pass while flowing a fluid through the measuring pass, and then detects a flow rate of the fluid based on measured information. A pair of ultrasonic transmitter-receivers are provided to the side surfaces of the short sides, which oppose to each other like a square cylinder shape whose cross section is a rectangle, of the measuring pass respectively.

These paired ultrasonic transmitter-receivers are arranged along a line, which intersect with the flowing direction of the measuring pass at a predetermined angle, to transmit/receive the ultrasonic wave. Also, recently the ultrasonic fluid measuring device whose measuring pass is constructed as a multi-layered pass by arranging a plurality of partition plates in parallel in the measuring pass to improve a measuring accuracy has been proposed (see Patent Literature 1, for example).

Patent literature 1: WO2004/074783

Disclosure of the Invention

Problems that the Invention is to Solve

However, when the measuring pass is constructed as the multi-layered pass, for example, a flow rate has a maximum value in the pass in a center layer of multiple layers whereas a flow rate is decreased as a location becomes more distant from the center layer. In this manner, since the fluid flowing through the multi-layered pass has a different flow rate every layered pass, there existed a problem in enhancing a measuring accuracy of an average flow rate of the fluid that flows through the measuring pass.

The present invention aims at providing an ultrasonic fluid measuring device capable of improving a measuring accuracy of an average flow rate.

Means for Solving the Problems

An ultrasonic fluid measuring device of the present invention, includes a measuring pass formed like a square cylinder whose cross section is a rectangle; an ultrasonic measuring portion in which a first ultrasonic transmitter-receiver and a second ultrasonic transmitter-receiver are provided to the measuring pass; and a plurality of pass partition plates contained in the measuring pass such that the pass partition plates are set in substantially parallel with an ultrasonic propagation path that connects the first ultrasonic transmitter-receiver and the second ultrasonic transmitter-receiver; whereby a plurality of flat passes are laminated/formed in the measuring pass by the pass partition plates, and wherein the first ultrasonic transmitter-receiver and the second ultrasonic transmitter-receiver are arranged with respect to respective flat passes such that the ultrasonic measuring portion measures a flow rate of the flat pass that is deviated from a center along a lamination direction.

Here, a flow rate in the flat pass located near the center along the lamination direction tends to have a highest value. Therefore, the first ultrasonic transmitter-receiver and the second ultrasonic transmitter-receiver are arranged such that the ultrasonic measuring portion measures a flow rate of the flat pass that is deviated from the center along the lamination direction out of a plurality of flat passes. Since a flow rate of the flat pass except the flat passes that are located near the center to exhibit a highest flow rate is measured, a value close to an average flow rate can be measured.

Also, in the ultrasonic fluid measuring device of the present invention, the first ultrasonic transmitter-receiver and the second ultrasonic transmitter-receiver are arranged to face to the flat pass that flows the fluid at an average flow rate out of the flat passes.

The first ultrasonic transmitter-receiver and the second ultrasonic transmitter-receiver are arranged to face to the flat pass that flows the fluid at an average flow rate out of a plurality of flat passes. Therefore, an average flow rate can be measured by the first ultrasonic transmitter-receiver and the second ultrasonic transmitter-receiver.

Also, in the ultrasonic fluid measuring device of the present invention, the first ultrasonic transmitter-receiver and the second ultrasonic transmitter-receiver are arranged to extend over a plurality of flat passes that are adjacent mutually out of the flat passes.

The first ultrasonic transmitter-receiver and the second ultrasonic transmitter-receiver are arranged to extend over a plurality of flat passes that are adjacent mutually, out of the flat passes except the flat passes that are located near the center to exhibit a highest flow rate.

Since a flow rate of the fluid passing through a plurality of flat passes is measured, a value close to an average flow rate can be measured.

Also, in the ultrasonic fluid measuring device of the present invention, the first ultrasonic transmitter-receiver and the second ultrasonic transmitter-receiver are arranged to face to the flat passes except either of the flat passes, through which the fluid passes at a highest flow rate, and the flat passes, through which the fluid passes at a lowest flow rate.

The first ultrasonic transmitter-receiver and the second ultrasonic transmitter-receiver are arranged to face to the flat passes except either of the flat passes, through which the fluid passes at a highest flow rate, and the flat passes, through which the fluid passes at a lowest flow rate, out of the flat passes apart from the flat passes that are located near the center to exhibit a highest flow rate. Therefore, a value close to an average flow rate can be measured by the first ultrasonic transmitter-receiver and the second ultrasonic transmitter-receiver.

Also, an ultrasonic fluid measuring device of the present invention, includes a measuring pass formed like a square cylinder whose cross section is a rectangle; an ultrasonic measuring portion in which a first ultrasonic transmitter-receiver and a second ultrasonic transmitter-receiver are provided to the measuring pass; and a plurality of pass partition plates contained in the measuring pass such that the pass partition plates are set in substantially parallel with an ultrasonic propagation path that connects the first ultrasonic transmitter-receiver and the second ultrasonic transmitter-receiver; whereby a plurality of flat passes are laminated/formed in the measuring pass by the pass partition plates, and wherein the first ultrasonic transmitter-receiver and the second ultrasonic transmitter-receiver are arranged to face to the flat passes except either of the flat passes, through which the fluid passes at a highest flow rate, and the flat passes, through which the fluid passes at a lowest flow rate.

The first ultrasonic transmitter-receiver and the second ultrasonic transmitter-receiver are arranged to face to the flat passes except either of the flat passes, through which the fluid passes at a highest flow rate, and the flat passes, through which the fluid passes at a lowest flow rate. Therefore, a value close to an average flow rate can be measured by the first ultrasonic transmitter-receiver and the second ultrasonic transmitter-receiver.

Also, in the ultrasonic fluid measuring device of the present invention, the ultrasonic propagation path that connects the first ultrasonic transmitter-receiver and the second ultrasonic transmitter-receiver has an angle to a flow of the measuring pass.

Also, in the ultrasonic fluid measuring device of the present invention, the first ultrasonic transmitter-receiver and the second ultrasonic transmitter-receiver are provided to a side wall on a same side of the measuring pass, and a propagation time of an ultrasonic wave is measured by causing an ultrasonic wave to reflect on an opposing side wall surface of the measuring pass.

Also, in the ultrasonic fluid measuring device of the present invention, the ultrasonic propagation path that connects the first ultrasonic transmitter-receiver and the second ultrasonic transmitter-receiver is set in substantially parallel with a flow in the measuring pass.

Also, the ultrasonic fluid measuring device of the present invention, further includes a first ultrasonic measuring portion and a second ultrasonic measuring portion; wherein the first ultrasonic transmitter-receiver and the second ultrasonic transmitter-receiver of the first ultrasonic measuring portion are arranged such that the first ultrasonic measuring portion measures a flow rate of one flat pass that is deviated from a center along a lamination direction out of the flat passes, and the first ultrasonic transmitter-receiver and the second ultrasonic transmitter-receiver of the second ultrasonic measuring portion are arranged such that the second ultrasonic measuring portion measures a flow rate of other flat pass that is deviated from the center along the lamination direction.

Also, in the ultrasonic fluid measuring device of the present invention, a first ultrasonic propagation path of the first ultrasonic measuring portion and a second ultrasonic propagation path of the second ultrasonic measuring portion are set in parallel when viewed along the lamination direction.

Also, in the ultrasonic fluid measuring device of the present invention, a first ultrasonic propagation path of the first ultrasonic measuring portion and a second ultrasonic propagation path of the second ultrasonic measuring portion intersect with each other when viewed along the lamination direction.

Advantages of the Invention

According to the ultrasonic fluid measuring device of the present invention, a value close to an average flow rate can be measured by the first ultrasonic transmitter-receiver and the second ultrasonic transmitter-receiver, and therefore such an advantage is obtained that a measuring accuracy can be improved.

Brief Description of the Drawings

FIG.1 is a sectional view showing an ultrasonic fluid measuring device (first embodiment) according to the present invention.
FIG.2 is a perspective view showing an ultrasonic measuring portion of the ultrasonic fluid measuring device according to the first embodiment of the present invention.
FIG.3 is a sectional view taken along an A-A line in FIG.1.
FIG.4 is an enlarged view showing the ultrasonic measuring portion according to the first embodiment.
FIG.5 is an enlarged view showing an ultrasonic measuring portion of an ultrasonic fluid measuring device according to a second embodiment.
FIG.6 is an enlarged view showing an ultrasonic measuring portion of an ultrasonic fluid measuring device according to a third embodiment.
FIG.7 is an enlarged view showing an ultrasonic measuring portion of an ultrasonic fluid measuring device according to a fourth embodiment.
FIGS.8A and 8B are an enlarged view and a major schematic perspective view showing an ultrasonic measuring portion of an ultrasonic fluid measuring device according to a fifth embodiment.
FIGS.9A to 9C are an enlarged view, a major schematic perspective view, and a major schematic plan view showing an ultrasonic measuring portion of an ultrasonic fluid measuring device according to a sixth embodiment.

Description of Reference Numerals and Signs

| 10, 50, 60, 70, 80, 90 | ultrasonic fluid measuring device |
| --- | --- |
| 14 | measuring pass |
| 15, 16 | left and right side walls (a pair of opposing inner surfaces) |
| 20, 20A, 20B | ultrasonic measuring portion |
| 21, 51, 51A, 51B, 61, 71 | first ultrasonic transmitter-receiver |
| 22, 52, 52A, 52B, 62, 72 | second ultrasonic transmitter-receiver |
| 24, 24A, 24B | ultrasonic propagation path |
| 25 to 29 | first to fifth pass partition plates (a plurality of pass partition plates) |
| 32 to 37 | first to sixth flat passes (a plurality of flat passes) |
| 38 | fluid |
| 39 | center along the lamination direction |

Best Mode for Carrying Out the Invention

Respective ultrasonic fluid measuring devices according to embodiments of the present invention will be explained with reference to the drawings hereinafter.

(First Embodiment)

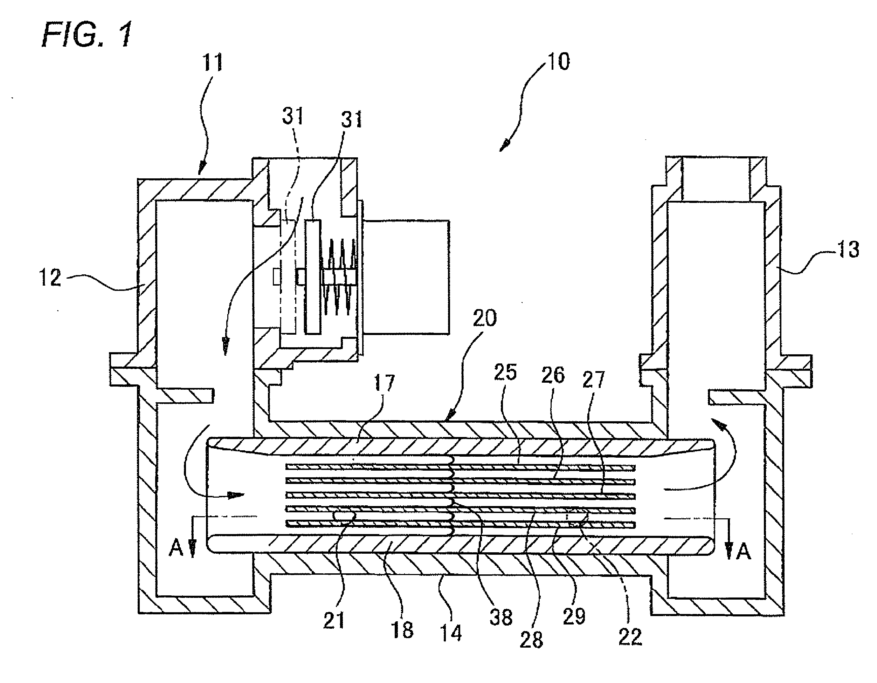

As shown in FIG.1 to FIG.3, an ultrasonic fluid measuring device 10 according to a first embodiment of the present invention includes a fluid pass 11, an ultrasonic measuring portion 20, and first to fifth pass partition plates 25 to 29 as a plurality of pass partition plates. The fluid pass 11 is formed into an almost U-shape by left and right vertical passes 12, 13 and a horizontal pass (measuring pass) 14. In the ultrasonic measuring portion 20, a first ultrasonic transmitter-receiver (ultrasonic transmitter) 21 and a second ultrasonic transmitter-receiver (ultrasonic receiver) 22 are provided to left and right side walls (a pair of opposing inner surfaces) 15, 16 in the measuring pass 14 respectively. The first to fifth pass partition plates 25 to 29 are contained in the measuring pass 14 such that these pass partition plates are arranged in substantially parallel with an ultrasonic propagation path 24 that is provided to connect the first ultrasonic transmitter-receiver 21 and the second ultrasonic transmitter-receiver 22 when viewed from the side.

The ultrasonic propagation path 24 is arranged to face to the flow at an angle. In this case, such an arrangement pattern is called the Z-path or the Z method that the first and second ultrasonic transmitter-receivers 21, 22 are arranged to face to the flow at an angle. In the present embodiment, explanation will be made based on this Z path arrangement.

The fluid pass 11 has an isolation valve 31 on the left vertical pass 12. First to fifth pass partition plates 25 to 29 are provided at a constant interval in the measuring pass 14 along upper and lower wall portions 17, 18.

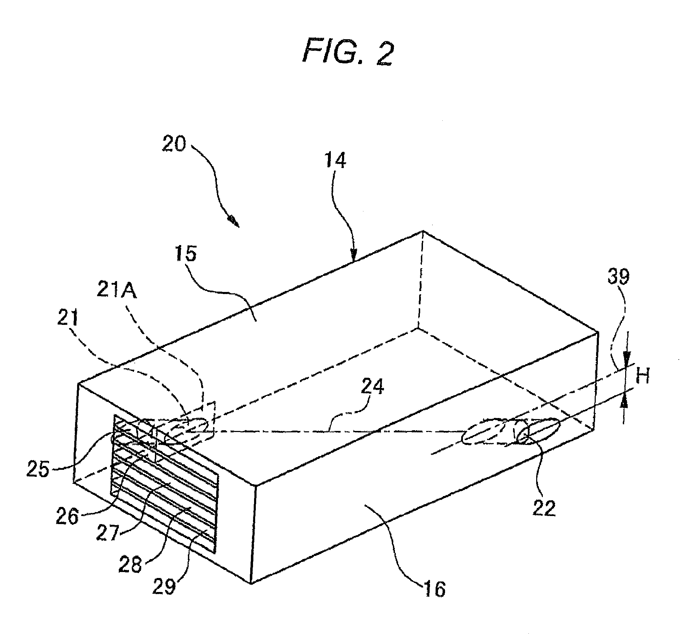

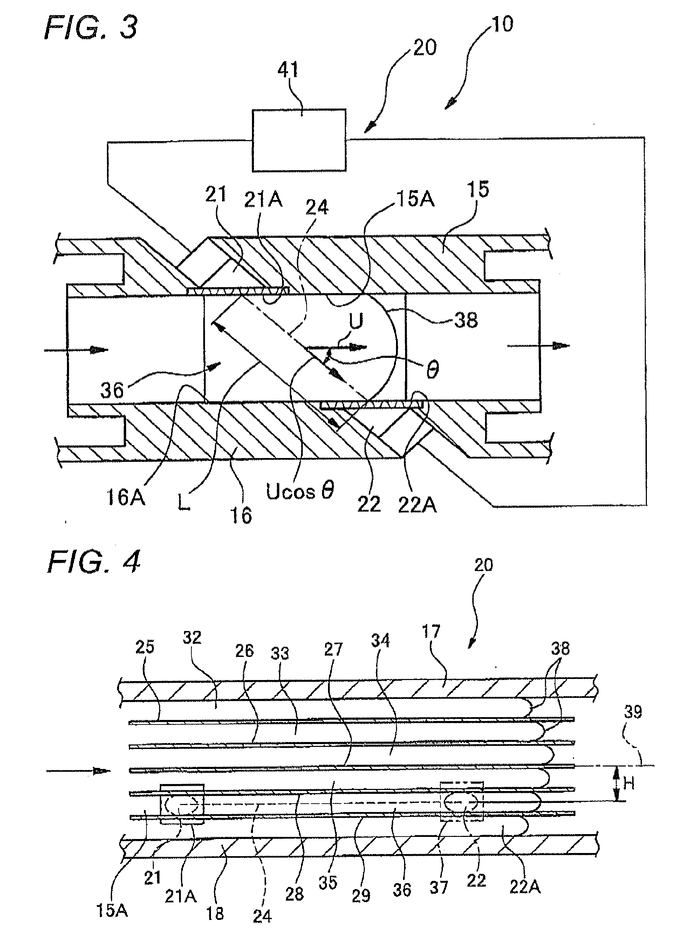

As shown in FIG.2, the measuring pass 14 is shaped into a square cylinder whose cross section is a rectangle, by left and right side walls 15, 16 and the upper and lower wall portions 17, 18. Also, since the first to fifth pass partition plates 25 to 29 are provided at a constant interval in the measuring pass 14, first to sixth flat passes 32 to 37 are laminated/ formed as a plurality of flat passes in the measuring pass 14, as shown in FIG.4.

The first to sixth flat passes 32 to 37 are formed to have a cross section of an almost rectangular shape respectively.

In the fluid pass 11, as shown in FIG.4, when the isolation valve 31 is opened from a close position indicated by a chain double-dashed line to an open position indicated by a solid line, a fluid (for example, a gas) 38 flows from the left vertical pass 12 to the right vertical pass 13 through the measuring pass 14, as indicated with an arrow.

At this time, as shown in FIG.4, out of the first to sixth flat passes 32 to 37, the fluid 38 that flows through the third and fourth flat passes 34 to 35 located near a fluid pass center (center) 39 of the measuring pass 14 has a maximum flow rate.

Also, it is highly possible that, out of the first to sixth flat passes 32 to 37, the fluid 38 in the first and sixth flat passes 32, 37 located near the upper and lower wall portions 17, 18 of the measuring pass 14 has a minimum flow rate.

Also, it is highly possible that, out of the first to sixth flat passes 32 to 37, the fluid 38 in the second and fifth flat passes 33, 36 has an average flow rate.

In the ultrasonic measuring portion 20, the first ultrasonic transmitter-receiver 21 and the second ultrasonic transmitter-receiver 22 are arranged to deviate downward from the center 39 along the lamination direction (i.e., in the vertical direction) by a height (distance) H with respect to the first to sixth flat passes 32 to 37. Then, a calculating portion 41 is connected to the first ultrasonic transmitter-receiver 21 and the second ultrasonic transmitter-receiver 22.

When the first ultrasonic transmitter-receiver 21 and the second ultrasonic transmitter-receiver 22 are arranged to deviate downward from the center 39 by a height H, the first ultrasonic transmitter-receiver 21 and the second ultrasonic transmitter-receiver 22 can be arranged to face to the fifth flat pass 36 by way of example.

In a situation that the first ultrasonic transmitter-receiver 21 and the second ultrasonic transmitter-receiver 22 are arranged to face to the fifth flat pass 36, the ultrasonic measuring portion 20 can measure a flow rate in the fifth flat pass 36 through which the fluid 38 passes at an average flow rate.

The first ultrasonic transmitter-receiver 21 is arranged on a portion 15A, which faces to the fifth flat pass 36 and is located on the upstream side of the second ultrasonic transmitter-receiver 22, of the left side wall 15 via an ultrasonic transmitting material 21A (see FIG.3).

The second ultrasonic transmitter-receiver 22 is arranged on a portion 16A, which faces to the fifth flat pass 36 and is located on the downstream side of the first ultrasonic transmitter-receiver 21, of the right side wall 16 via an ultrasonic transmitting material 22A (see FIG.3).

Concretely, as shown in FIG.3, the ultrasonic propagation path 24 between the first ultrasonic transmitter-receiver 21 and the second ultrasonic transmitter-receiver 22 is the Z-path that is set at an angle θ to the flow direction (the direction indicated with an arrow) of the fifth flat pass 36 to cross obliquely the flow direction of the fifth flat pass 36 when viewed from the top.

Also, a propagation distance of the ultrasonic propagation path 24 between the first ultrasonic transmitter-receiver 21 and the second ultrasonic transmitter-receiver 22 is set to L.

Based on respective data of a sound velocity C, the propagation distance L, an angle θ of the ultrasonic propagation path, a first ultrasonic propagation time T1 required of the ultrasonic wave to travel from the first ultrasonic transmitter-receiver 21 to the second ultrasonic transmitter-receiver 22, and a second ultrasonic propagation time T2 required of the ultrasonic wave to travel from the second ultrasonic transmitter-receiver 22 to the first ultrasonic transmitter-receiver 21, the calculating portion 41 calculates a flow rate U of the fluid by Eq. (1) to Eq. (3).

$$T1 = L / (C + U \cos\theta) \qquad \ldots (1)$$

$$T2 = L / (C - U \cos\theta) \qquad \ldots (2)$$

$$U=L/2\cos\theta((1/T1)-(1/T2)) \quad ...(3)$$

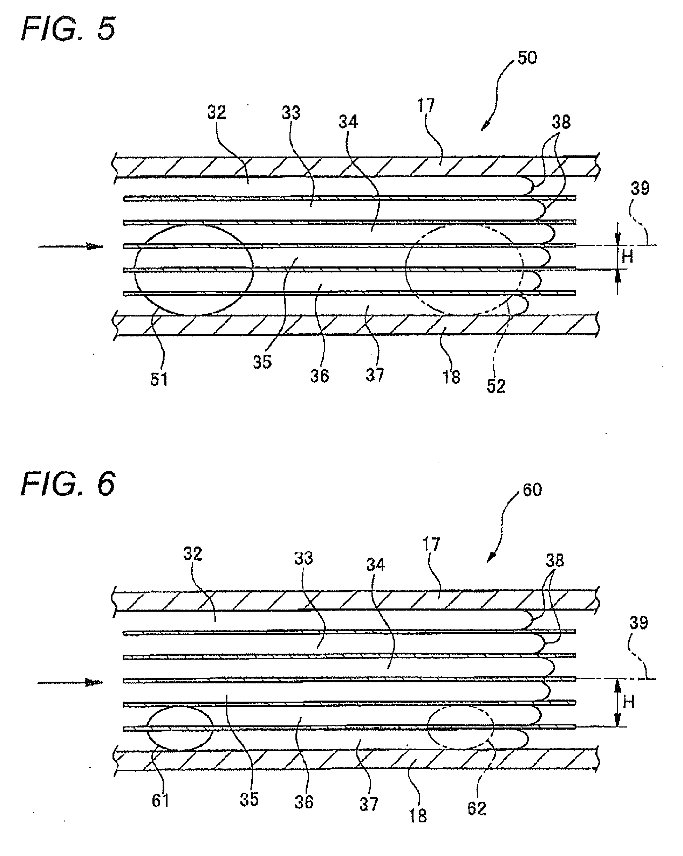

Next, an operation of the ultrasonic fluid measuring device 10 according to the first embodiment will be explained with reference to FIG.1, FIG.3, and FIG.4 hereunder.
The fluid (gas) 38 is caused to flow into the left vertical pass 12 by opening the isolation valve 31 of the fluid pass 11 shown in FIG.1. The fluid 38 that flows into the left vertical pass 12 flows in turn into the measuring pass 14. The fluid 38 that flows into the measuring pass 14 flows in turn into the first to sixth flat passes 32 to 37 shown in FIG.4.
As shown in FIG. 4, there is a high possibility that, out of the first to sixth flat passes 32 to 37, the fluid 38 in the second and fifth flat passes 33, 36 has an average flow rate.
The ultrasonic wave is emitted toward the second ultrasonic transmitter-receiver 22 from the first ultrasonic transmitter-receiver 21 shown in FIG.4. The ultrasonic wave is propagated from the first ultrasonic transmitter-receiver 21 to the second ultrasonic transmitter-receiver 22 through the fluid 38 in the fifth flat pass 36. The first ultrasonic propagation time T1 needed when the ultrasonic wave is propagated from the first ultrasonic transmitter-receiver 21 to the second ultrasonic transmitter-receiver 22 is calculated by the calculating portion 41.
Similarly, the ultrasonic wave is emitted toward the first ultrasonic transmitter-receiver 21 from the second ultrasonic transmitter-receiver 22. The ultrasonic wave is propagated from the second ultrasonic transmitter-receiver 22 to the first ultrasonic transmitter-receiver 21 through the fluid 38 in the fifth flat pass 36. The second ultrasonic propagation time T2 needed when the ultrasonic wave is propagated from the second ultrasonic transmitter-receiver 22 to the first ultrasonic transmitter-receiver 21 is calculated by the calculating portion 41.
The flow rate U of the gas is calculated based on the first and second ultrasonic propagation times T1, T2.
Here, it is highly possible that the fluid 38 in the fifth flat pass 36 out of the first to sixth flat passes 32 to 37 has an average flow rate.
Therefore, when a flow rate of the fluid 38 flowing through the fifth flat pass 36 is measured, an average flow rate of the fluid 38 can be measured. As a result, a flow rate of the fluid 38 can be measured with good accuracy.
In the present embodiment, the fluid pass 11 is formed into an almost U-shape by the left and right vertical passes 12, 13 and the horizontal pass (measuring pass) 14. But any fluid pass may be employed if such fluid pass may be formed into a U-shape, and the fluid pass is not restricted to this embodiment. For example, a configurations obtained by turning the present embodiment by 90 degree may be employed, i.e., a fluid pass may be constructed by upper and lower vertical passes and a vertical pass (measuring pass).
Next, ultrasonic fluid measuring devices according to second to fourth embodiments will be explained with reference to FIG.5 to FIG.7 hereunder. In order to facilitate the understanding of the ultrasonic fluid measuring device, the ultrasonic transmitting materials 21A, 22A are omitted from FIG.5 to FIG.7.

(Second Embodiment)

In an ultrasonic fluid measuring device 50 shown in FIG.5 according to a second embodiment, a first ultrasonic transmitter-receiver 51 and a second ultrasonic transmitter-receiver 52 are arranged to deviate downward from the center 39 along the lamination direction (i.e., in the vertical direction) by a height (distance) H and extend over the mutually neighboring third to sixth flat passes 34 to 37, for example, out of the first to sixth flat passes 32 to 37. Remaining configurations are similar to those in the first embodiment.
The first ultrasonic transmitter-receiver 51 has the same functions as the first ultrasonic transmitter-receiver 21 except that its shape is enlarged in size in contrast to the first ultrasonic transmitter-receiver 21 of the first embodiment. The second ultrasonic transmitter-receiver 52 has the same functions as the second ultrasonic transmitter-receiver 22 except that its shape is enlarged in size in contrast to the second ultrasonic transmitter-receiver 22 of the first embodiment.
According to the ultrasonic fluid measuring device 50 of the second embodiment, the first ultrasonic transmitter-receiver 51 and the second ultrasonic transmitter-receiver 52 are arranged to extend over the mutually neighboring third to sixth flat passes 34 to 37, and therefore a flow rate of the fluid 38 passing through the third to sixth flat passes 34 to 37 can be measured. As a result, a value close to an average flow rate can be measured.

(Third Embodiment)

In an ultrasonic fluid measuring device 60 shown in FIG.6 according to a third embodiment, a first ultrasonic transmitter-receiver 61 and a second ultrasonic transmitter-receiver 62 are arranged to deviate downward from the center 39 along the lamination direction (i.e., in the vertical direction) by a height (distance) H and face to the fifth and sixth flat passes 36, 37, for example, as the flat passes out of the first to sixth flat passes 32 to 37 except either of the third and fourth flat passes 34, 35, through which the fluid 38 passes at a highest flow rate, and the first and sixth flat passes 32, 37, through which the fluid 38 passes at a lowest flow rate. Remaining configurations are similar to those in the first embodiment.

The first ultrasonic transmitter-receiver 61 has the same functions as the first ultrasonic transmitter-receiver 21 except that its shape is enlarged in size in contrast to the first ultrasonic transmitter-receiver 21 of the first embodiment. The second ultrasonic transmitter-receiver 62 has the same functions as the second ultrasonic transmitter-receiver 22 except that its shape is enlarged in size in contrast to the second ultrasonic transmitter-receiver 22 of the first embodiment.

According to the ultrasonic fluid measuring device 60 of the third embodiment, the first ultrasonic transmitter-receiver 61 and the second ultrasonic transmitter-receiver 62 are arranged to face to the fifth and sixth flat passes 36, 37 except either of the third and fourth flat passes 34, 35 that give the highest flow rate and the first and sixth flat passes 32, 37 that give the lowest flow rate, out of all flat passes apart from the flat passes located near the center (third and fourth flat passes 34, 35). As a result, a value close to an average flow rate can be measured by the first ultrasonic transmitter-receiver 61 and the second ultrasonic transmitter-receiver 62.

(Fourth Embodiment)

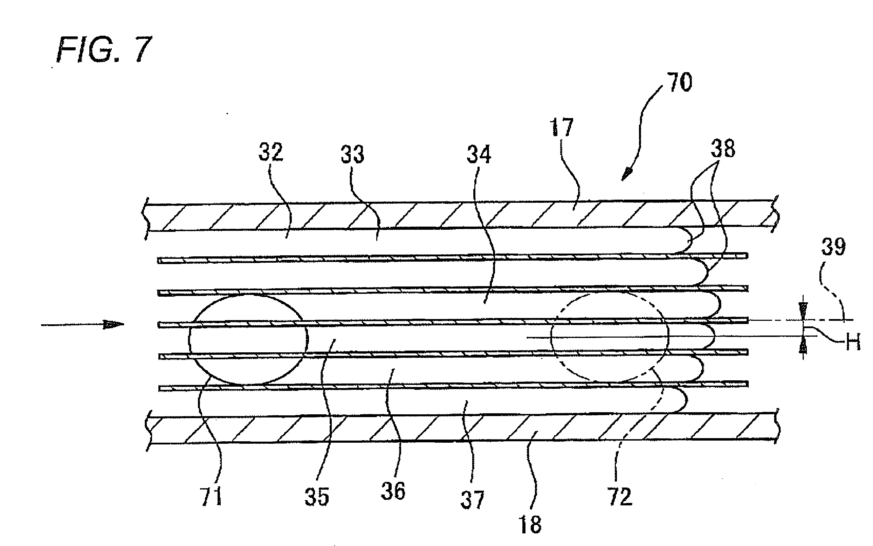

In an ultrasonic fluid measuring device 70 shown in FIG.7 according to a fourth embodiment, a first ultrasonic transmitter-receiver 71 and a second ultrasonic transmitter-receiver 72 are arranged to face to the third to fifth flat passes 34 to 36, for example, as the flat passes out of the first to sixth flat passes 32 to 37 except either of the third and fourth flat passes 34, 35, through which the fluid 38 passes at a highest flow rate, and the first and sixth flat passes 32, 37, through which the fluid 38 passes at a lowest flow rate. Remaining configurations are similar to those in the first embodiment.

The first ultrasonic transmitter-receiver 71 has the same functions as the first ultrasonic transmitter-receiver 21 except that its shape is enlarged in size in contrast to the first ultrasonic transmitter-receiver 21 of the first embodiment. The second ultrasonic transmitter-receiver 72 has the same functions as the second ultrasonic transmitter-receiver 22 except that its shape is enlarged in size in contrast to the second ultrasonic transmitter-receiver 22 of the first embodiment.

According to the ultrasonic fluid measuring device 70 of the fourth embodiment, the first ultrasonic transmitter-receiver 71 and the second ultrasonic transmitter-receiver 72 are arranged to face to the third to fifth flat passes 34 to 36 except either of the third and fourth flat passes 34, 35 that give the highest flow rate and the first and sixth flat passes 32, 37 that give the lowest flow rate. As a result, a value close to an average flow rate can be measured by the first ultrasonic transmitter-receiver 71 and the second ultrasonic transmitter-receiver 72.

In the above embodiment, an example in which the ultrasonic propagation path 24 between the first ultrasonic transmitter-receiver 21 and the second ultrasonic transmitter-receiver 22 is set to correspond to the Z-path is explained. The present invention is not restricted to this embodiment. As the ultrasonic propagation path 24, a pair of ultrasonic transmitter-receivers 21, 22 may be provided to the side wall 15 or the side wall 16 on the same side of the measuring pass 14, and then the propagation time of the ultrasonic wave may be measured by causing the ultrasonic wave to reflect on the opposing side wall surface of the measuring pass 14 once (the V-path or the V method) or twice (the W-path or the W method). Also, such an ultrasonic transmitter-receiver arranging pattern (the I-path or the I method) may be employed that a pair of ultrasonic transmitter-receivers 21, 22 are provided with no angle to the flow, i.e., the ultrasonic wave is transmitted/received in parallel with the flow.

Also, the shapes and the configurations of the fluid pass 11, the measuring pass 14, and the like illustrated in the above embodiment are not restricted to them, and may be changed appropriately.

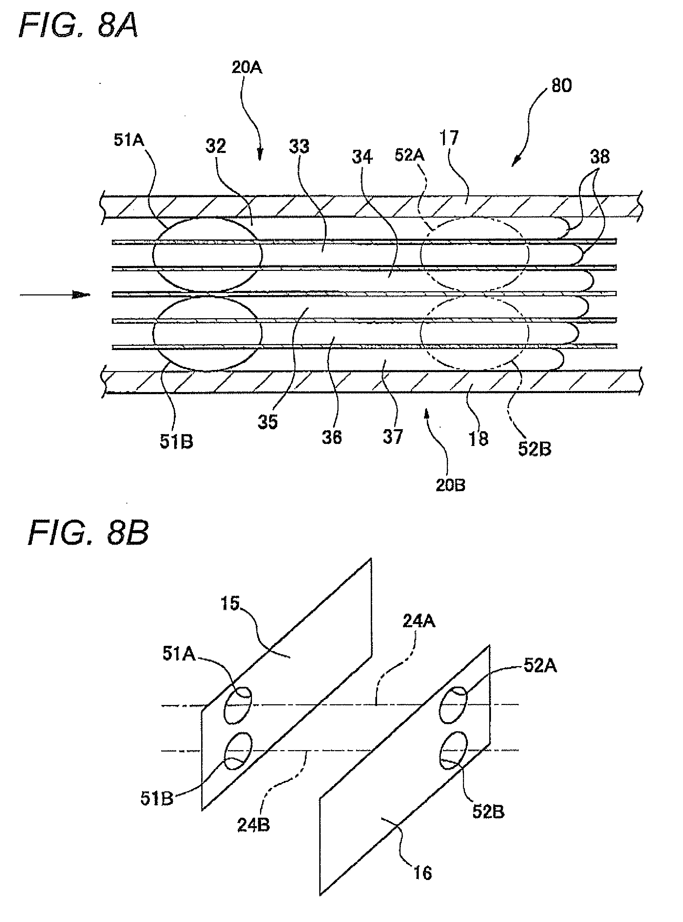

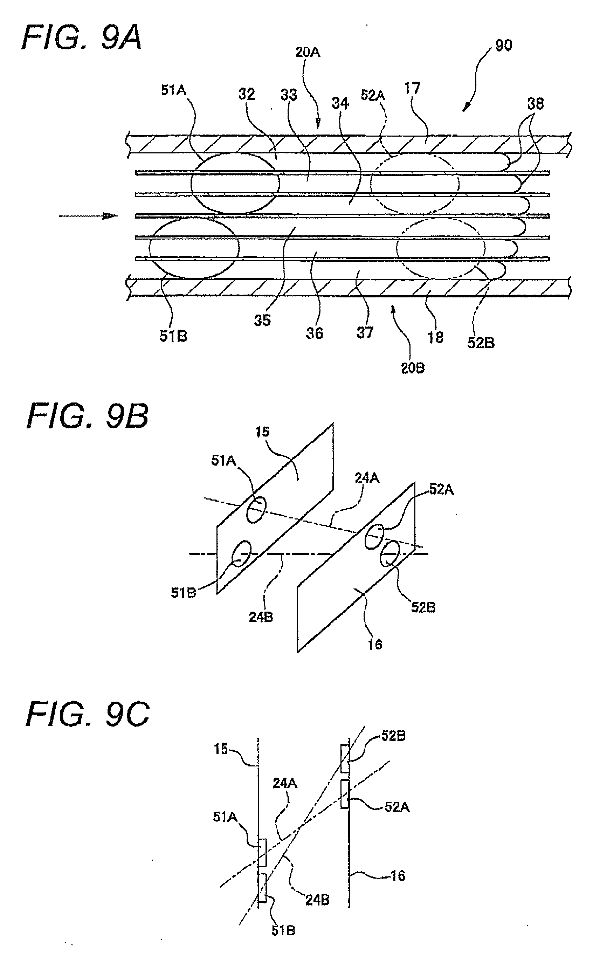

For example, a fifth embodiment shown in FIGS.8A and 8B and a sixth embodiment shown in FIGS.9A to 9C are also contained in the present invention.

An ultrasonic fluid measuring device 80 shown in FIGS.8A and 8B according to a fifth embodiment is equipped with a first ultrasonic measuring portion 20A and a second ultrasonic measuring portion 20B. The first ultrasonic measuring portion 20A and the second ultrasonic measuring portion 20B are arranged in positions that are deviate upward and downward from the center 39 along the lamination direction (i.e., in the vertical direction) out of the first to sixth flat passes 32 to 37.

Concretely, a first ultrasonic transmitter-receiver 51A and a second ultrasonic transmitter-receiver 52A are arranged in the first ultrasonic measuring portion 20A to extend over the mutually neighboring the first to third flat passes 32 to 34.

In contrast, a first ultrasonic transmitter-receiver 51B and a second ultrasonic transmitter-receiver 52B are arranged in the second ultrasonic measuring portion 20B to extend over the mutually neighboring the fourth to sixth flat passes 35 to 37.

Therefore, as shown in FIG.8B, in the ultrasonic fluid measuring device 80, an ultrasonic propagation path 24A between the first ultrasonic transmitter-receiver 51A and the second ultrasonic transmitter-receiver 52A and an ultrasonic propagation path 24B between the first ultrasonic transmitter-receiver 51B and the second ultrasonic transmitter-receiver 52B are set in parallel with each other when views along the lamination direction of the first to sixth flat passes 32 to 37.

According to this ultrasonic fluid measuring device 80, when the flows in all the first to sixth flat passes 32 to 37 are measured by the first ultrasonic measuring portion 20A and the second ultrasonic measuring portion 20B, a flow rate of the fluid 38 can be measured further with good accuracy.

Also, normally a flow rate of the fluid 38 is measured by using only one of the first ultrasonic measuring portion 20A and the second ultrasonic measuring portion 20B. When a high accuracy measurement is needed, a flow rate of the fluid 38 can be measured further with good accuracy by using both the first ultrasonic measuring portion 20A and the second ultrasonic measuring portion 20B.

An ultrasonic fluid measuring device 90 shown in FIGS.9A to 9C according to a sixth embodiment is a variation of the above fifth embodiment. The first ultrasonic transmitter-receiver 51A, the second ultrasonic transmitter-receiver 52A, the first ultrasonic transmitter-receiver 51B, and the second ultrasonic transmitter-receiver 52B are arranged such that the ultrasonic propagation path 24A and the ultrasonic propagation path 24B intersect with each other when viewed along the lamination direction of the first to sixth flat passes 32 to 37 (see FIGS.9B,9C).

According to the ultrasonic fluid measuring device 90, like the above fifth embodiment, when the flows in all the first to sixth flat passes 32 to 37 are measured by the first ultrasonic measuring portion 20A and the second ultrasonic measuring portion 20B, a flow rate of the fluid 38 can be measured further with good accuracy.

Also, normally a flow rate of the fluid 38 is measured by using only one of the first ultrasonic measuring portion 20A and the second ultrasonic measuring portion 20B. When a high accuracy measurement is needed, a flow rate of the fluid 38 can be measured further with good accuracy by using both the first ultrasonic measuring portion 20A and the second ultrasonic measuring portion 20B.

Also, when one ultrasonic measuring portion, which is suitable for a flow rate of the fluid 38, out of the first ultrasonic measuring portion 20A and the second ultrasonic measuring portion 20B is used selectively, an optimum measured value responding to a flow rate of the fluid 38 can be obtained. Thus, a measuring accuracy can be improved.

This application is based upon Japanese Patent Application (Patent Application No.2006-254432) filed on September 20, 2006; the contents of which are incorporated herein by reference.

The present invention is suitable for the application to the ultrasonic fluid measuring device that measures an average flow rate of the fluid flowing through the measuring pass.

**Claims**

1. An ultrasonic fluid measuring device, comprising:

   a measuring pass formed like a square cylinder whose cross section is a rectangle;
   an ultrasonic measuring portion in which a first ultrasonic transmitter-receiver and a second ultrasonic transmitter-receiver are provided to the measuring pass; and
   a plurality of pass partition plates contained in the measuring pass such that the pass partition plates are set in substantially parallel with an ultrasonic propagation path that connects the first ultrasonic transmitter-receiver and the second ultrasonic transmitter-receiver;
   whereby a plurality of flat passes are laminated/formed in the measuring pass by the pass partition plates, and wherein the first ultrasonic transmitter-receiver and the second ultrasonic transmitter-receiver are arranged with respect to respective flat passes such that the ultrasonic measuring portion measures a flow rate of a flat pass that is deviated from a center along a lamination direction.

2. An ultrasonic fluid measuring device according to claim 1, wherein the first ultrasonic transmitter-receiver and the second ultrasonic transmitter-receiver are arranged to face to the flat pass that flows the fluid at an average flow rate out of the flat passes.

3. An ultrasonic fluid measuring device according to claim 1, wherein the first ultrasonic transmitter-receiver and the second ultrasonic transmitter-receiver are arranged to extend over a plurality of flat passes that are adjacent mutually out of the flat passes.

4. An ultrasonic fluid measuring device according to claim 1, wherein the first ultrasonic transmitter-receiver and the second ultrasonic transmitter-receiver are arranged to face to the flat passes except either of the flat passes, through which the fluid passes at a highest flow rate, and the flat passes, through which the fluid passes at a lowest flow rate.

5. An ultrasonic fluid measuring device, comprising:

   a measuring pass formed like a square cylinder whose cross section is a rectangle;
   an ultrasonic measuring portion in which a first ultrasonic transmitter-receiver and a second ultrasonic transmitter-receiver are provided to the measuring pass; and

a plurality of pass partition plates contained in the measuring pass such that the pass partition plates are set in substantially parallel with an ultrasonic propagation path that connects the first ultrasonic transmitter-receiver and the second ultrasonic transmitter-receiver;

whereby a plurality of flat passes are laminated/formed in the measuring pass by the pass partition plates, and wherein the first ultrasonic transmitter-receiver and the second ultrasonic transmitter-receiver are arranged to face to the flat passes except either of the flat passes, through which the fluid passes at a highest flow rate, and the flat passes, through which the fluid passes at a lowest flow rate.

6. An ultrasonic fluid measuring device according to claim 1 or 5, wherein the ultrasonic propagation path that connects the first ultrasonic transmitter-receiver and the second ultrasonic transmitter-receiver has an angle to a flow of the measuring pass.

7. An ultrasonic fluid measuring device according to claim 1 or 5, wherein the first ultrasonic transmitter-receiver and the second ultrasonic transmitter-receiver are provided to a side wall on a same side of the measuring pass, and a propagation time of an ultrasonic wave is measured by causing an ultrasonic wave to reflect on an opposing side wall surface of the measuring pass.

8. An ultrasonic fluid measuring device according to claim 1 or 5, wherein the ultrasonic propagation path that connects the first ultrasonic transmitter-receiver and the second ultrasonic transmitter-receiver is set in substantially parallel with a flow in the measuring pass.

9. An ultrasonic fluid measuring device according to claim 1 or 5, further comprising:

a first ultrasonic measuring portion and a second ultrasonic measuring portion;

wherein the first ultrasonic transmitter-receiver and the second ultrasonic transmitter-receiver of the first ultrasonic measuring portion are arranged such that the first ultrasonic measuring portion measures a flow rate of one flat pass that is deviated from a center along a lamination direction out of the flat passes, and

the first ultrasonic transmitter-receiver and the second ultrasonic transmitter-receiver of the second ultrasonic measuring portion are arranged such that the second ultrasonic measuring portion measures a flow rate of other flat pass that is deviated from the center along the lamination direction.

10. An ultrasonic fluid measuring device according to claim 9, wherein a first ultrasonic propagation path of the first ultrasonic measuring portion and a second ultrasonic propagation path of the second ultrasonic measuring portion are set in parallel when viewed along the lamination direction.

11. An ultrasonic fluid measuring device according to claim 9, wherein a first ultrasonic propagation path of the first ultrasonic measuring portion and a second ultrasonic propagation path of the second ultrasonic measuring portion intersect with each other when viewed along the lamination direction.

FIG. 1

# FIG. 2

*FIG. 3*

*FIG. 4*

*FIG. 5*

*FIG. 6*

FIG. 7

*FIG. 8A*

*FIG. 8B*

*FIG. 9A*

*FIG. 9B*

*FIG. 9C*

**EP 2 053 366 A1**

<div align="center">

## INTERNATIONAL SEARCH REPORT

</div>

| | International application No. |
|---|---|
| | PCT/JP2007/068302 |

**A. CLASSIFICATION OF SUBJECT MATTER**
*G01F1/66*(2006.01)i

According to International Patent Classification (IPC) or to both national classification and IPC

**B. FIELDS SEARCHED**

Minimum documentation searched (classification system followed by classification symbols)
G01F1/66

Documentation searched other than minimum documentation to the extent that such documents are included in the fields searched
Jitsuyo Shinan Koho        1922-1996   Jitsuyo Shinan Toroku Koho   1996-2007
Kokai Jitsuyo Shinan Koho  1971-2007   Toroku Jitsuyo Shinan Koho   1994-2007

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2004-251700 A (Matsushita Electric Industrial Co., Ltd.), 09 September, 2004 (09.09.04), Par. No. [0053]; Fig. 6 (Family: none) | 1-11 |
| Y | JP 2005-257363 A (Matsushita Electric Industrial Co., Ltd.), 22 September, 2005 (22.09.05), Par. No. [0003]; Fig. 2 (Family: none) | 1-11 |
| Y | JP 2004-45425 A (Matsushita Electric Industrial Co., Ltd.), 12 February, 2004 (12.02.04), Par. Nos. [0003] to [0007]; Figs. 2, 3 (Family: none) | 1-11 |

☒ Further documents are listed in the continuation of Box C.       ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 09 October, 2007 (09.10.07) | 16 October, 2007 (16.10.07) |

| Name and mailing address of the ISA/ | Authorized officer |
|---|---|
| Japanese Patent Office | |
| Facsimile No. | Telephone No. |

Form PCT/ISA/210 (second sheet) (April 2007)

17

**INTERNATIONAL SEARCH REPORT**

| International application No. |
| --- |
| PCT/JP2007/068302 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 2002-5705 A (Matsushita Electric Industrial Co., Ltd.), 09 January, 2002 (09.01.02), Figs. 2, 3 (Family: none) | 1-11 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004074783 A
- JP 2006254432 A